# EUROPÄISCHE PATENTSCHRIFT

(11) **EP 3 424 296 B1**
(45) Veröffentlichungstag und Bekanntmachung des Hinweises auf die Patenterteilung: **29.11.2023**
(21) Anmeldenummer: 17179676.6
(22) Anmeldetag: 04.07.2017
(51) Int. Cl.: A01G 3/08

(54) **VERFAHREN ZUM ERMITTELN EINER INFORMATION ZUM EINSTELLEN EINER EINSTELLBAREN KOMPONENTE EINES VERBRENNUNGSMOTORANTRIEBSSYSTEMS EINES GARTEN- UND/ODER FORSTGERÄTS, GARTEN- UND/ODER FORSTGERÄTESYSTEM UND GARTEN- UND/ODER FORSTGERÄT**
METHOD FOR DETERMINING AN ITEM OF INFORMATION FOR ADJUSTING AN ADJUSTABLE COMPONENT OF A COMBUSTION MOTOR DRIVE SYSTEM OF A GARDENING AND/OR FORESTRY DEVICE, GARDENING AND/OR FORESTRY DEVICE SYSTEM AND GARDEN AND/OR FORESTRY DEVICE
PROCÉDÉ DE DÉTERMINATION D'UNE INFORMATION POUR RÉGLER UN COMPOSANT RÉGLABLE D'UN SYSTÈME D'ENTRAÎNEMENT DE MOTEUR À COMBUSTION INTERNE D'UN APPAREIL DE JARDINAGE ET/OU FORESTIER, SYSTÈME D'APPAREIL DE JARDINAGE ET/OU FORESTIER ET APPAREIL DE JARDINAGE ET/OU FORESTIER

(43) Veröffentlichungstag der Anmeldung: 09.01.2019
(73) Patentinhaber: Andreas Stihl AG & Co. KG, 71336 Waiblingen (DE)
(72) Erfinder: Eberle, Christian, 71404, Korb (DE); Hoche, Florian, 74354 Besigheim (DE); Meyer, Stephan, 71332 Waiblingen (DE); Naegele, Claus, 70563, Stuttgart (DE)
(74) Vertreter: Patentanwälte Ruff, Wilhelm, Beier, Dauster & Partner mbB

(56) Entgegenhaltungen:
- WO-A1-2013/134709
- DE-A1-102013 215 148
- US-A1- 2012 110 985

## Beschreibung

### ANWENDUNGSGEBIET UND STAND DER TECHNIK

Die Erfindung bezieht sich auf ein Verfahren zum Ermitteln einer Information zum Einstellen einer einstellbaren Komponente eines Verbrennungsmotorantriebssystems eines Garten- und/oder Forstgeräts, ein Garten- und/oder Forstgerätesystem und ein Garten- und/oder Forstgerät.

Ein Verfahren zum Einstellen einer einstellbaren Komponente eines Verbrennungsmotorantriebssystems eines Garten- und/oder Forstgeräts, ein Garten- und/oder Forstgerätesystem und ein Garten- und/oder Forstgerät sind bekannt.

Insbesondere ist aus der US 2012/0110985 A1 ein Verfahren zum Aufwärmen eines Ventils, um bei niedrigen Temperaturen eine hohe Viskosität eines Schmiermittels des Ventils zu erniedrigen und somit eine Ansprechzeit des Ventils zu verbessern, bekannt. Das Ventil kann beispielsweise ein Abgasregenerationsventil oder ein Verbrennungsluftventil sein. Das Ventil ist Teil einer Maschine wie beispielsweise eines Harvesters. Des Weiteren weist die Maschine einen Temperatursensor zum Messen einer Umgebungstemperatur, einen Controller und einen (Elektro-)Motor zum Kontrollieren einer Position des Ventils auf. Bei niedrigen Temperaturen wird der Motor mit einem Strom derart beaufschlagt, dass der Motor versucht, das bereits geschlossene Ventil bzw. eine Ventilklappe weiter gegen einen Sitz zu rotieren. Dabei erwärmt sich der Motor und somit wird das Ventil aufgewärmt.

### AUFGABE UND LÖSUNG

Der Erfindung liegt als Aufgabe die Bereitstellung eines Verfahrens zum Ermitteln einer Information zum Einstellen einer einstellbaren Komponente eines Verbrennungsmotorantriebssystems eines Garten- und/oder Forstgeräts zugrunde, das verbesserte Eigenschaften aufweist, insbesondere mehr Funktionalitäten, und/oder das benutzerfreundlich ist. Des Weiteren liegt der Erfindung als Aufgabe die Bereitstellung eines Garten- und/oder Forstgerätesystems und eines Garten- und/oder Forstgeräts zugrunde.

Die Erfindung löst diese Aufgabe durch die Bereitstellung eines Verfahrens mit den Merkmalen des Anspruchs 1. Des Weiteren wird die der Erfindung zugrundeliegende Aufgabe durch ein Garten- und/oder Forstgerätesystem mit den Merkmalen des Anspruchs 11 und ein Garten- und/oder Forstgerät mit den Merkmalen des Anspruchs 15 gelöst. Vorteilhafte Weiterbildungen und/oder Ausgestaltungen der Erfindung sind in den abhängigen Ansprüchen beschrieben.

Das erfindungsgemäße, insbesondere automatische, Verfahren zum Ermitteln einer Information zum Einstellen einer einstellbaren Komponente eines Verbrennungsmotorantriebssystems eines Garten- und/oder Forstgeräts weist die Schritte auf: a) Bereitstellen, insbesondere automatisches Bereitstellen, insbesondere mindestens, eines Kenngrößenparameters mittels eines mobilen oder portablen Bereitstellungsgeräts, wobei das mobile Bereitstellungsgerät getrennt von dem Garten- und/oder Forstgerät ausgebildet ist, wobei der Kenngrößenparameter eine Kenngröße einer Umgebung des Garten- und/oder Forstgeräts beschreibt, b) Ermitteln der Information zum Einstellen der einstellbaren Komponente in Abhängigkeit von dem bereitgestellten Kenngrößenparameter.

Das Verfahren ermöglicht ein optimales Einstellen der einstellbaren Komponente des Verbrennungsmotorantriebssystems des Garten- und/oder Forstgeräts. Somit ermöglicht das Verfahren ein optimales Starten und/oder ein optimales Betreiben des Verbrennungsmotorantriebssystems. Das mobile Bereitstellungsgerät ermöglicht ein benutzerfreundliches Mitführen.

Die Umgebung kann eine Umgebungsluft des Garten- und/oder Forstgeräts aufweisen oder sein.

Das Starten und/oder das Betreiben des Verbrennungsmotorantriebssystems können/kann von einer Einstellung der einstellbaren Komponente und/oder von der Umgebung beziehungsweise ihrer Kenngröße abhängen oder zumindest beeinflusst sein. Das Einstellen der Komponente kann eine Anpassung des Verbrennungsmotorantriebssystems an die Umgebung ermöglichen.

Die Information kann die Einstellung der einstellbaren Komponente aufweisen oder sein, insbesondere eine Starteinstellung zum Starten des Verbrennungsmotorantriebssystems.

Das mobile Bereitstellungsgerät ist getrennt von dem Garten- und/oder Forstgerät ausgebildet. In anderen Worten: das mobile Bereitstellungsgerät kann oder braucht kein Bestandteil der Komponente sein, insbesondere kein Bestandteil des Verbrennungsmotorantriebssystem, insbesondere kein Bestandteil des Garten- und/oder Forstgeräts. Das mobile Bereitstellungsgerät kann handgetragen sein. Die Information kann mittels des mobilen Bereitstellungsgeräts ermittelt werden beziehungsweise dieses kann dazu ausgebildet sein.

Das Garten- und/oder Forstgerät kann als ein handgeführtes Garten- und/oder Forstgerät ausgebildet sein, insbesondere als ein handgetragenes Garten- und/oder Forstgerät oder ein bodengeführtes Garten- und/oder Forstgerät. Handgeführtes, insbesondere handgetragenes, Garten- und/oder Forstgerät kann bedeuten, dass das Garten- und/oder Forstgerät eine maximale Masse von 50 Kilogramm (kg), insbesondere von 20 kg, insbesondere von 10 kg, aufweisen kann.

Der Kenngrößenparameter kann einen Wert und/oder einen Betrag der Kenngröße aufweisen oder sein.

Der Schritt b) kann zeitgleich mit dem Schritt a) und/oder zeitlich nach diesem ausgeführt werden.

In einer Weiterbildung der Erfindung weist das Verfahren den Schritt auf: Ausgeben, insbesondere automatisches Ausgeben, und/oder Übertragen, insbesondere automatisches Übertragen, der ermittelten Information. Der Schritt kann zeitgleich mit dem Schritt b) oder zeitlich nach dem Schritt b) ausgeführt werden. Das Ausgeben ermöglicht einem Garten- und/oder Forstarbeiter beziehungsweise einem Benutzer des Garten- und/oder Forstgeräts die einstellbare Komponente einzustellen. Insbesondere kann die ermittelte Information von dem mobilen Bereitstellungsgerät ausgegeben werden beziehungsweise dieses kann dazu ausgebildet sein. Das Übertragen kann von dem mobilen Bereitstellungsgerät erfolgen beziehungsweise dieses kann dazu ausgebildet sein. Dies kann als Senden bezeichnet werden. Das Übertragen kann an das Garten- und/oder Forstgerät erfolgen beziehungsweise dieses kann dazu ausgebildet sein. Dies kann als Empfangen bezeichnet werden. Insbesondere kann das Übertragen kabellos oder drahtlos erfolgen. Das Übertragen kann dem Garten- und/oder Forstgerät ein Einstellen der einstellbaren Komponente ermöglichen.

In einer Ausgestaltung der Erfindung wird die Information optisch, akustisch und/oder haptisch ausgegeben. Dies kann dem Garten- und/oder Forstarbeiter eine relativ gute Wahrnehmung der Information ermöglichen. Insbesondere kann das optische Ausgeben ein Anzeigen aufweisen. Das optische Ausgeben kann ein Einblenden oder Projizieren der Information in ein Sichtfeld des Garten- und/oder Forstarbeiters aufweisen. Das haptische Ausgeben kann ein Vibrieren aufweisen.

In einer Weiterbildung der Erfindung weist das Verfahren den Schritt auf: Übertragen, insbesondere automatisches Übertragen, des bereitgestellten Kenngrößenparameters. Der Schritt b) weist auf: Ermitteln der Information zum Einstellen der einstellbaren Komponente in Abhängigkeit von dem übertragenen Kenngrößenparameter. Das Übertragen kann von dem mobilen Bereitstellungsgerät erfolgen. Das Übertragen kann an das Garten- und/oder Forstgerät erfolgen. Insbesondere kann das Übertragen kabellos oder drahtlos erfolgen. Die Information kann mittels des Garten- und/oder Forstgeräts ermittelt werden beziehungsweise dieses kann dazu ausgebildet sein.

In einer Weiterbildung der Erfindung weist das Verfahren den Schritt auf: Einstellen, insbesondere automatisches Einstellen, der einstellbaren Komponente basierend auf der ermittelten Information. Das Einstellen kann mittels des Garten- und/oder Forstgeräts beziehungsweise seines Verbrennungsmotorantriebssystems selbst erfolgen beziehungsweise dieses kann dazu ausgebildet sein.

In einer Weiterbildung der Erfindung weist der Schritt a) auf: Empfangen, insbesondere kabelloses oder drahtloses Empfangen, oder Abrufen des Kenngrößenparameters, insbesondere von einer Datenbank und/oder einem Netzwerk, insbesondere von dem Internet. Anders formuliert: das mobile Bereitstellungsgerät kann eine Empfangseinheit aufweisen, die zum Empfangen des Kenngrößenparameters ausgebildet sein kann. Die Empfangseinheit kann eine Mobilfunk-Empfangseinheit, insbesondere eine UMTS-Empfangseinheit oder eine auf einer anderen Technik basierende Empfangseinheit, aufweisen.

In einer Weiterbildung der Erfindung weist das mobile Bereitstellungsgerät, insbesondere mindestens, einen Sensor auf. Der Schritt a) weist auf: Erfassen der Kenngröße mittels des Sensors. Insbesondere kann der Sensor dabei räumlich getrennt oder entfernt von der einstellbaren Komponente, insbesondere von dem Verbrennungsmotorantriebssystem, insbesondere von dem Garten- und/oder Forstgerät, angeordnet sein.

In einer Weiterbildung der Erfindung weist die Kenngröße auf: eine meteorologische Kenngröße, eine Höhe, eine Position und/oder einen von einem Betrieb des Verbrennungsmotorantriebssystems erzeugten Schall. Insbesondere kann die meteorologische Kenngröße eine Lufttemperatur, eine Luftfeuchtigkeit, einen Taupunkt, einen Luftdruck, eine Luftdichte, eine Luftzusammensetzung, eine Windrichtung, eine Windgeschwindigkeit, eine Niederschlagsart, eine Niederschlagsmenge und/oder eine Jahreszeit aufweisen. Von der Jahreszeit können/kann insbesondere die Lufttemperatur und/oder die Luftfeuchtigkeit und/oder der Taupunkt und/oder der Luftdruck und/oder die Luftdichte und/oder die Luftzusammensetzung und/oder die Windrichtung und/oder die Windgeschwindigkeit und/oder die Niederschlagsart und/oder die Niederschlagsmenge abhängen oder zumindest beeinflusst sein. Die Einstellung der einstellbaren Komponente beziehungsweise das Starten und/oder der Betrieb des Verbrennungsmotorantriebssystems kann von der meteorologischen Kenngröße abhängen oder zumindest beeinflusst sein. Der zuvor beschriebene Sensor kann dazu ausgebildet sein, die meteorologische Kenngröße und/oder ihren Parameter beziehungsweise Wert zu erfassen. Der Sensor kann ein Thermometer, ein Hygrometer, ein Taupunktspiegelhygrometer, ein Barometer und/oder einen Niederschlagsmesser aufweisen. Die Höhe kann insbesondere die Höhe über dem Meeresspiegel sein. Aus der Höhe kann die meteorologische Kenngröße oder ihr Parameter für diese Höhe bereitgestellt oder ermittelt, insbesondere empfangen, werden. Der zuvor beschriebene Sensor kann dazu ausgebildet sein, die Höhe und/oder ihren Parameter beziehungsweise Wert zu erfassen. Der Sensor kann einen Höhenmesser aufweisen. Insbesondere kann aus der Position die meteorologische Kenngröße oder ihr Parameter für diese Position bereitgestellt oder ermittelt, insbesondere empfangen, werden. Zusätzlich oder alternativ kann aus der Position die Höhe oder ihr Parameter für diese Position bereitgestellt oder ermittelt, insbesondere empfangen, werden. Der zuvor beschriebene Sensor kann dazu ausgebildet sein, die Position und/oder ihren Parameter beziehungsweise Wert zu erfassen. Der Sensor kann einen Positionsbestimmungssensor aufweisen, insbesondere einen Satelliten-Positionsbestimmungsempfänger. Insbesondere kann der Schall von einer aktuellen Einstellung der einstellbaren Komponente abhängen oder zumindest beeinflusst sein. Ein Kenngrößenparameter des Schalls kann eine Schallfrequenz und/oder eine Schallstärke aufweisen oder sein. Der zuvor beschriebene Sensor kann dazu ausgebildet sein, den Schall und/oder seinen Parameter beziehungsweise Wert zu erfassen. Der Sensor kann einen Schallwandler aufweisen, insbesondere ein Mikrophon.

In einer Weiterbildung der Erfindung weist die einstellbare Komponente einen Gemischaufbereiter auf oder ist ein Gemischaufbereiter. Die Information weist eine Gemischaufbereitereinstellung auf oder ist eine Gemischaufbereitereinstellung. Insbesondere kann die Gemischaufbereitereinstellung von der Umgebung, insbesondere von der Umgebungsluft, beziehungsweise ihrer meteorologischen Kenngröße abhängen oder zumindest beeinflusst sein. Das Einstellen des Gemischaufbereiters kann eine Anpassung des Verbrennungsmotorantriebssystems an die Umgebung ermöglichen. Die Gemischaufbereitereinstellung kann einen Wert und/oder einen Betrag aufweisen oder sein. Insbesondere kann der Gemischaufbereiter einen Vergaser aufweisen und die Gemischaufbereitereinstellung kann eine Vergasereinstellung aufweisen. Zusätzlich oder alternativ kann der Gemischaufbereiter ein Kraftstoffeinlassventil, insbesondere ein Kraftstoffeinspritzventil, aufweisen und die Gemischaufbereitereinstellung kann eine Kraftstoffeinlassventileinstellung aufweisen. Weiter zusätzlich oder alternativ kann der Gemischaufbereiter ein Motorsteuerungsgerät aufweisen und die Gemischaufbereitereinstellung kann eine Motorsteuerungseinstellung aufweisen.

In einer Weiterbildung der Erfindung weist das Garten- und/oder Forstgerät eine Säge, einen Hoch-Entaster, einen Freischneider, eine Heckenschere, einen Heckenschneider, ein Blasgerät, einen Laubbläser, ein Kehrgerät, eine Kehrwalze, eine Kehrbürste, einen Rasenmäher und/oder einen Vertikutierer auf oder ist ein solches spezifisches Garten- und/oder Forstgerät. Insbesondere kann die Säge, der Hoch-Entaster, der Freischneider, die Heckenschere, der Heckenschneider, das Blasgerät oder der Laubbläser jeweils als handgetragenes Garten- und/oder Forstgerät bezeichnet werden. Insbesondere kann das Kehrgerät, die Kehrwalze, die Kehrbürste, der Rasenmäher oder der Vertikutierer jeweils als bodengeführtes Garten- und/oder Forstgerät bezeichnet werden.

Des Weiteren bezieht sich die Erfindung auf ein Garten- und/oder Forstgerätesystem, das insbesondere zum Ausführen des zuvor beschriebenen Verfahrens ausgebildet sein kann. Das erfindungsgemäße Garten- und/oder Forstgerätesystem weist das mobile Bereitstellungsgerät auf, das zum Bereitstellen des Kenngrößenparameters ausgebildet ist, wobei das mobile Bereitstellungsgerät getrennt von dem Garten- und/oder Forstgerät ausgebildet ist, wobei der Kenngrößenparameter die Kenngröße der Umgebung des Garten- und/oder Forstgeräts beschreibt. Das Garten- und/oder Forstgerät weist das Verbrennungsmotorantriebssystem auf, das die einstellbare Komponente aufweist. Des Weiteren ist das Garten- und/oder Forstgerätesystem zum Ermitteln der Information zum Einstellen der einstellbaren Komponente in Abhängigkeit von dem bereitgestellten Kenngrößenparameter ausgebildet.

Das Garten- und/oder Forstgerätesystem kann die gleichen Vorteile ermöglichen wie das zuvor beschriebene Verfahren.

Insbesondere kann das Garten- und/oder Forstgerätesystem eine Ermittlungseinrichtung aufweisen, die zum Ermitteln der Information ausgebildet sein kann. Die Ermittlungseinrichtung kann eine Rechen- und/oder Speichereinheit aufweisen. Insbesondere kann das mobile Bereitstellungsgerät die Ermittlungseinrichtung aufweisen.

Das Garten- und/oder Forstgerätesystem kann eine Ausgabeeinrichtung aufweisen, die zum Ausgeben der ermittelten Information ausgebildet sein kann. Die Ausgabeeinrichtung kann eine Anzeige, einen Schallerzeuger und/oder eine Vibrationseinrichtung aufweisen. Insbesondere kann das mobile Bereitstellungsgerät die Ausgabeeinrichtung aufweisen. Zusätzlich oder alternativ kann die Anzeige dazu ausgebildet sein, die Information in dem Sichtfeld des Garten- und/oder Forstarbeiters anzuzeigen und/oder in dieses zu projizieren oder einzublenden. Die Anzeige kann auf Englisch als Head-up-Display bezeichnet werden. Dies kann auf Englisch als Virtual Reality und/oder als Augmented Reality bezeichnet werden. Insbesondere kann die Anzeige dazu ausgebildet sein, im Bereich oder sogar am Kopf des Garten- und/oder Forstarbeiters angeordnet zu werden. Die Anzeige kann auf Englisch als Head-mounted-Display bezeichnet werden.

In einer Weiterbildung der Erfindung weist das mobile Bereitstellungsgerät ein Smartphone und/oder eine Smartwatch auf oder ist ein Smartphone oder eine Smartwatch.

In einer Weiterbildung der Erfindung weist das Garten- und/oder Forstgerätesystem das Garten- und/oder Forstgerät auf.

In einer Ausgestaltung der Erfindung weist das mobile Bereitstellungsgerät eine Bereitstellungsübertragungseinheit auf, insbesondere eine Bereitstellungssendeeinheit. Das Garten- und/oder Forstgerät weist eine Garten- und/oder Forstübertragungseinheit auf, insbesondere eine Garten- und/oder Forstempfangseinheit. Die Bereitstellungsübertragungseinheit und die Garten- und/oder Forstübertragungseinheit sind zum Zusammenwirken miteinander und zum Übertragen des bereitgestellten Kenngrößenparameters und/oder zum Übertragen der ermittelten Information ausgebildet. Insbesondere kann die Bereitstellungsübertragungseinheit eine lokale Funk-Bereitstellungsübertragungseinheit, insbesondere eine WLAN-, und/oder Bluetooth-Bereitstellungsübertragungseinheit oder eine auf einer anderen Technik basierende Bereitstellungsübertragungseinheit, aufweisen. Die Garten- und/oder Forstübertragungseinheit kann eine lokale Funk-Garten- und/oder Forstübertragungseinheit, insbesondere eine WLAN-, und/oder Bluetooth-Garten- und/oder Forstübertragungseinheit oder eine auf einer anderen Technik basierende Garten- und/oder Forstübertragungseinheit, aufweisen. Insbesondere kann das Garten- und/oder Forstgerät die Ermittlungseinrichtung aufweisen. Zusätzlich oder alternativ kann das Garten- und/oder Forstgerät die Ausgabeeinrichtung aufweisen. Weiter zusätzlich oder alternativ kann das Garten- und/oder Forstgerät beziehungsweise sein Verbrennungsmotorantriebssystem eine Einstellungseinrichtung aufweisen, die zum Einstellen der einstellbaren Komponente basierend auf der ermittelten Information ausgebildet sein kann. Insbesondere können/kann die Garten- und/oder Forstübertragungseinheit, die Ermittlungseinrichtung, soweit in dem Garten- und/oder Forstgerät vorhanden, die Ausgabeeinrichtung, soweit in dem Garten- und/oder Forstgerät vorhanden, und/oder die Einstellungseinrichtung, soweit vorhanden, nach einer Betätigung oder während eines Betriebs des Verbrennungsmotorantriebssystems funktionstüchtig sein, insbesondere nur dann.

Außerdem bezieht sich die Erfindung auf das Garten- und/oder Forstgerät. Das erfindungsgemäße Garten- und/oder Forstgerät weist das Verbrennungsmotorantriebssystem, das die einstellbare Komponente aufweist, und die Garten- und/oder Forstübertragungseinheit auf. Die Garten- und/oder Forstübertragungseinheit ist zum Übertragen der Information zum Einstellen der einstellbaren Komponente von dem mobilen Bereitstellungsgerät ausgebildet. Zusätzlich oder alternativ ist die Garten- und/oder Forstübertragungseinheit zum Übertragen des Kenngrößenparameters von dem mobilen Bereitstellungsgerät, wobei der Kenngrößenparameter die Kenngröße der Umgebung des Garten- und/oder Forstgeräts beschreibt, ausgebildet. Mindestens in diesem Fall ist das Garten- und/oder Forstgerät zum Ermitteln der Information zum Einstellen der einstellbaren Komponente in Abhängigkeit von dem Kenngrößenparameter ausgebildet. Das mobile Bereitstellungsgerät ist getrennt von dem Garten- und/oder Forstgerät ausgebildet.

Das Garten- und/oder Forstgerät kann die gleichen Vorteile ermöglichen wie das zuvor beschriebene Verfahren und/oder wie das zuvor beschriebene Garten- und/oder Forstgerätesystem.

Insbesondere kann das Garten- und/oder Forstgerät die Ausgabeeinrichtung aufweisen. Zusätzlich oder alternativ kann das Garten- und/oder Forstgerät beziehungsweise sein Verbrennungsmotorantriebssystem eine Einstellungseinrichtung aufweisen, die zum Einstellen der einstellbaren Komponente basierend auf der ermittelten Information ausgebildet sein kann.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: ein Ablaufdiagramm eines erfindungsgemäßen Verfahrens,
- Fig. 2: eine Perspektivansicht eines erfindungsgemäßen Garten- und/oder Forstgerätesystems mit mindestens einem mobilen Bereitstellungsgerät und mit einem Garten- und/oder Forstgerät in einem Betrieb,
- Fig. 3: eine Längsschnittansicht des Garten- und/oder Forstgeräts der Fig. 2 und
- Fig. 4: eine Vorderansicht des mobilen Bereitstellungsgeräts der Fig. 2.

### DETAILLIERTE BESCHREIBUNG DER AUSFÜHRUNGSBEISPIELE

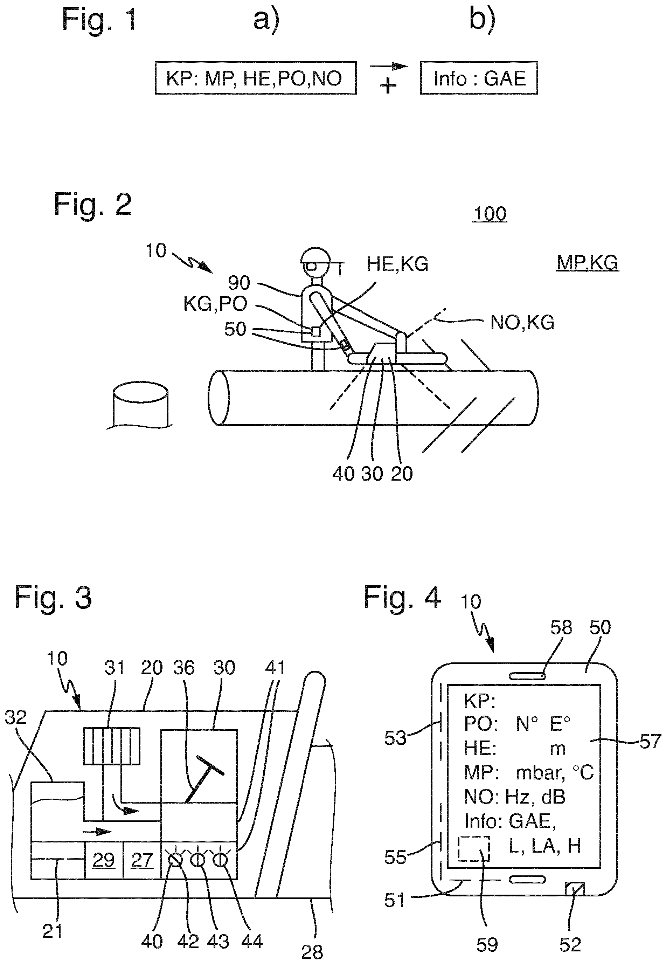

Fig. 2 bis 4 zeigen ein erfindungsgemäßes Garten- und/oder Forstgerätesystem 10. Das Garten- und/oder Forstgerätesystem 10 weist ein mobiles Bereitstellungsgerät 50 auf. Das mobile Bereitstellungsgerät 50 ist zum Bereitstellen eines Kenngrößenparameters KP beziehungsweise seines Werts ausgebildet. Der Kenngrößenparameter KP beziehungsweise sein Wert beschreibt eine Kenngröße KG einer Umgebung 100 eines Garten- und/oder Forstgeräts 20. Das Garten- und/oder Forstgerät 20 weist ein Verbrennungsmotorantriebssystem 30 auf, das eine einstellbare Komponente 40 aufweist. Das Garten- und/oder Forstgerätesystem 10 ist zum Ermitteln einer Information Info zum Einstellen der einstellbaren Komponente 40 in Abhängigkeit von dem bereitgestellten Kenngrößenparameter KP ausgebildet.

Im gezeigten Ausführungsbeispiel weist das Garten- und/oder Forstgerätesystem 10 mindestens eine Ermittlungseinrichtung 29, 59 auf, die zum Ermitteln der Information Info ausgebildet ist. Im Detail weist die Ermittlungseinrichtung eine nicht dargestellte Rechen- und/oder Speichereinheit auf. Im gezeigten Ausführungsbeispiel weist das Garten- und/oder Forstgerätesystem 10 zwei Ermittlungseinrichtungen 29, 59 auf. Das mobile Bereitstellungsgerät 50 weist die eine Ermittlungseinrichtung 59 auf. Das Garten- und/oder Forstgerät 20 weist die andere Ermittlungseinrichtung 29 auf. In alternativen Ausführungsbeispielen kann es ausreichen, wenn entweder das mobile Bereitstellungsgerät oder das Garten- und/oder Forstgerät die Ermittlungseinrichtung aufweisen kann.

Des Weiteren weist das Garten- und/oder Forstgerätesystem 10 mindestens eine Ausgabeeinrichtung 57, 58 auf, die zum Ausgeben der ermittelten Information Info ausgebildet ist. Im gezeigten Ausführungsbeispiel weist das mobile Bereitstellungsgerät 50 die Ausgabeeinrichtung 57, 58 auf. In alternativen Ausführungsbeispielen kann das Garten- und/oder Forstgerät zusätzlich oder alternativ die Ausgabeeinrichtung aufweisen.

Außerdem weist im gezeigten Ausführungsbeispiel das Garten- und/oder Forstgerätesystem 10 zwei mobile Bereitstellungsgeräte 50 auf. Das eine mobile Bereitstellungsgerät 50 weist ein Smartphone auf, das in Fig. 2 in einer Tasche eines Garten- und/oder Forstarbeiters 90 angeordnet ist. Das andere mobile Bereitstellungsgerät 50 weist eine Smartwatch auf, die in Fig. 2 am rechten Arm des Garten- und/oder Forstarbeiters 90 angeordnet ist. In alternativen Ausführungsbeispielen kann es ausreichen, wenn das Garten- und/oder Forstgerätesystem nur ein einziges mobiles Bereitstellungsgerät aufweisen kann.

Weiter weist das Garten- und/oder Forstgerätesystem 10 das Garten- und/oder Forstgerät 20 auf.

Fig. 1 zeigt ein erfindungsgemäßes Verfahren zum Ermitteln der Information Info zum Einstellen der einstellbaren Komponente 40 des Verbrennungsmotorantriebssystems 30 des Garten- und/oder Forstgeräts 20, insbesondere mittels des zuvor beschriebenen Garten- und/oder Forstgerätesystems 10. Das Verfahren weist die Schritte auf: a) Bereitstellen des Kenngrößenparameters KP mittels des mobilen Bereitstellungsgeräts 50, wobei der Kenngrößenparameter KP die Kenngröße der Umgebung 100 des Garten- und/oder Forstgeräts 20 beschreibt, b) Ermitteln der Information Info zum Einstellen der einstellbaren Komponente 40 in Abhängigkeit vom bereitgestellten Kenngrößenparameter KP, insbesondere mittels der Ermittlungseinrichtung 29, 59.

Zudem weist das Garten- und/oder Forstgerät 20 eine Säge auf. In alternativen Ausführungsbeispielen kann das Garten- und/oder Forstgerät zusätzlich oder alternativ einen Hoch-Entaster, einen Freischneider, eine Heckenschere, einen Heckenschneider, ein Blasgerät, einen Laubbläser, ein Kehrgerät, eine Kehrwalze, eine Kehrbürste, einen Rasenmäher und/oder einen Vertikutierer aufweisen. Das Garten- und/oder Forstgerät 20 weist ein Garten- und/oder Forstwerkzeug 28 in Form einer Sägekette auf. Das Verbrennungsmotorantriebssystem 30 ist zum Antreiben des Garten- und/oder Forstwerkzeugs 28 ausgebildet.

Im Detail weist die Komponente 40 einen Gemischaufbereiter 41 auf. Die Information Info weist eine Gemischaufbereitereinstellung GAE beziehungsweise ihren Wert auf, insbesondere eine Starteinstellung zum Starten des Verbrennungsmotorantriebssystems 30.

Im gezeigten Ausführungsbeispiel weist der Gemischaufbereiter 41 einen Vergaser auf und die Gemischaufbereitereinstellung GAE weist eine Vergasereinstellung auf. In alternativen Ausführungsbeispielen kann der Gemischaufbereiter zusätzlich oder alternativ ein Kraftstoffeinlassventil, insbesondere ein Kraftstoffeinspritzventil, aufweisen und die Gemischaufbereitereinstellung kann eine Kraftstoffeinlassventileinstellung aufweisen. Weiter kann in alternativen Ausführungsbeispielen zusätzlich oder alternativ der Gemischaufbereiter ein Motorsteuerungsgerät aufweisen und die Gemischaufbereitereinstellung kann eine Motorsteuerungseinstellung aufweisen. Im Detail weist der Vergaser eine benutzereinstellbare L-Schraube 42 für eine Luftdüse auf, wie in Fig. 3 zu erkennen. Eine Einstellung der L-Schraube 42 betrifft ein Luft-Kraftstoffgemisch des Verbrennungsmotorantriebssystems 30. Luft kann dem Gemischaufbereiter 41 von einer Luftzufuhr 31 zugeführt werden. Kraftstoff kann dem Gemischaufbereiter 41 von einem Kraftstofftank 32 zugeführt werden. Des Weiteren weist der Vergaser eine benutzereinstellbare LA-Schraube 43 für einen Leerlaufanschlag auf. Eine Einstellung der LA-Schraube 43 betrifft eine Leerlaufdrehzahl des Verbrennungsmotorantriebssystems 30. Außerdem weist der Vergaser eine benutzereinstellbare H-Schraube 44 für eine Hauptdüse auf. Eine Einstellung der H-Schraube 44 betrifft eine Höchstdrehzahl des Verbrennungsmotorantriebssystems 30.

Ein Starten und/oder ein Betreiben des Verbrennungsmotorantriebssystems 30 hängt von der Einstellung der einstellbaren Komponente 40 und von der Umgebung 100, insbesondere der Umgebungsluft, beziehungsweise ihrer Kenngröße KG ab.

Im Detail weist die Kenngröße KG eine meteorologische Kenngröße MP, eine Höhe HE, eine Position PO und einen von dem Betrieb des Verbrennungsmotorantriebssystems 30 erzeugten Schall NO auf, wie in Fig. 3 angedeutet. In alternativen Ausführungsbeispielen kann es ausreichen, wenn die Kenngröße entweder die meteorologische Kenngröße oder die Höhe oder die Position oder den Schall aufweisen kann. Im gezeigten Ausführungsbeispiel weist die meteorologische Kenngröße MP eine Lufttemperatur, eine Luftfeuchtigkeit, einen Taupunkt, einen Luftdruck, eine Luftdichte, eine Luftzusammensetzung, eine Windrichtung, eine Windgeschwindigkeit, eine Niederschlagsart, eine Niederschlagsmenge und eine Jahreszeit auf. In alternativen Ausführungsbeispielen kann es ausreichen, wenn die meteorologische Kenngröße nur einen Teil dieser spezifischen meteorologischen Kenngrößen aufweisen kann. Des Weiteren ist im gezeigten Ausführungsbeispiel die Höhe HE die Höhe über dem Meeresspiegel. Außerdem ist der Schall NO von einer aktuellen Einstellung der einstellbaren Komponente 40 abhängig oder zumindest beeinflusst.

Das mobile Bereitstellungsgerät 50 weist einen Sensor 51, 52 auf. Der Schritt a) weist auf: Erfassen der Kenngröße KG mittels des Sensors 51, 52.

Im gezeigten Ausführungsbeispiel weist das mobile Bereitstellungsgerät 50 zwei Sensoren 51, 52 auf. Der Sensor 51 ist als ein Positionsbestimmungssensor ausgebildet, insbesondere als ein Satelliten-Positionsbestimmungsempfänger. Der Sensor 52 ist als ein Mikrofon ausgebildet. In alternativen Ausführungsbeispielen kann das mobile Bereitstellungsgerät einen Teil der zuvor beschriebenen Sensoren aufweisen. Weiter kann in alternativen Ausführungsbeispielen das mobile Bereitstellungsgerät zusätzlich oder alternativ andere Sensoren aufweisen. Mittels des Sensors 51 wird die Position PO erfasst. Mittels des Sensors 52 wird der Schall erfasst.

Des Weiteren weist das mobile Bereitstellungsgerät 50 eine Empfangseinheit 53 auf. Die Empfangseinheit 53 ist als eine Mobilfunk-Antenne ausgebildet.

Außerdem weist der Schritt a) auf: Empfangen des Kenngrößenparameters KP, insbesondere von einer Datenbank und/oder einem Netzwerk, insbesondere mittels der Empfangseinheit 53.

Im gezeigten Ausführungsbeispiel wird die Höhe HE beziehungsweise ihr Parameter für die erfasste Position PO empfangen. Des Weiteren wird die meteorologische Kenngröße MP beziehungsweise ihr Parameter für die erfasste Position PO empfangen.

Weiter weist das Verfahren den Schritt auf: Ausgeben der ermittelten Information Info, insbesondere mittels der Ausgabeeinrichtung 57, 58.

Im Detail weist die Ausgabeeinrichtung eine Anzeige 57 in Form eines Touchscreens, einen Schallerzeuger 58 in Form eines Lautsprechers und eine nicht dargestellte Vibrationseinrichtung auf. In alternativen Ausführungsbeispielen kann es ausreichen, wenn die Ausgabeeinrichtung entweder die Anzeige oder den Schallerzeuger oder die Vibrationseinrichtung aufweisen kann.

Entsprechend wird die Information Info optisch, akustisch und/oder haptisch ausgegeben.

Die ermittelte Information beziehungsweise ihre Gemischaufbereitereinstellung GAE hängt von der Umgebung 100 beziehungsweise ihrer Kenngröße KG ab, insbesondere von ihrem Wert. In einer ersten beispielhaften Situation ist das Garten- und/oder Forstgerät 20 in großer Höhe. Die Jahreszeit ist Winter. Der Luftdruck ist relativ niedrig. Die Lufttemperatur ist relativ niedrig. Für diese erste Situation wird die Gemischaufbereitereinstellung GAE, insbesondere zum Starten des Verbrennungsmotorantriebssystems 30, eine Kaltstarteinstellung sein. In einer zweiten beispielhaften Situation ist das Garten- und/oder Forstgerät 20 auf Meereshöhe. Die Jahreszeit ist Sommer. Der Luftdruck ist relativ hoch. Die Lufttemperatur ist relativ hoch. Für diese zweite Situation wird die Gemischaufbereitereinstellung GAE, insbesondere zum Starten des Verbrennungsmotorantriebssystems 30, eine Warmstarteinstellung sein. Nach einem Starten des Verbrennungsmotorantriebssystems 30 kann der von seinem Betrieb erzeugte Schall NO erfasst werden. Der Schall NO kann von einer aktuellen Einstellung der einstellbaren Komponente 40 abhängen oder zumindest beeinflusst sein. Falls die Einstellung der einstellbaren Komponente 40 nicht optimal ist, kann eine optimale Einstellung ermittelt und ausgegeben werden.

Somit kann der Garten- und/oder Forstarbeiter 90 basierend auf der ermittelten und ausgegeben Information Info die einstellbare Komponente 40 einstellen.

Im gezeigten Ausführungsbeispiel weist das mobile Bereitstellungsgerät 50 zusätzlich eine Bereitstellungsübertragungseinheit 55 auf, insbesondere eine Bereitstellungssendeeinheit. Die Bereitstellungsübertragungseinheit 55 ist als eine lokale Funk-Antenne ausgebildet. Das Garten- und/oder Forstgerät 20 weist eine Garten- und/oder Forstübertragungseinheit 21 auf, insbesondere eine Garten- und/oder Forstempfangseinheit. Die Garten- und/oder Forstübertragungseinheit 21 ist als eine lokale Funk-Antenne ausgebildet. Die Bereitstellungsübertragungseinheit 55 und die Garten- und/oder Forstübertragungseinheit 21 sind zum Zusammenwirken miteinander und zum Übertragen des bereitgestellten Kenngrößenparameters KP ausgebildet.

Zusätzlich weist das Garten- und/oder Forstgerät 20 die Ermittlungseinrichtung 29 auf, wie zuvor beschrieben.

Das Verfahren weist den Schritt auf: Übertragen des bereitgestellten Kenngrößenparameters KP, insbesondere von dem mobilen Bereitstellungsgerät 50 zu dem Garten- und/oder Forstgerät 20. Der Schritt b) weist auf: Ermitteln der Information Info zum Einstellen der einstellbaren Komponente 40 in Abhängigkeit vom übertragenen Kenngrößenparameter KP, insbesondere mittels der Ermittlungseinrichtung 29.

Zudem weist das Garten- und/oder Forstgerät 20 beziehungsweise sein Verbrennungsmotorantriebssystem 30 eine Einstellungseinrichtung 27 auf, die zum automatischen Einstellen der einstellbaren Komponente 40 basierend auf der ermittelten Information Info ausgebildet ist. Im gezeigten Ausführungsbeispiel sind die Ermittlungseinrichtung 29 und die Einstellungseinrichtung 27 zum Zusammenwirken miteinander ausgebildet. Des Weiteren ist die Einstellungseinrichtung 27 dazu ausgebildet, den Gemischaufbereiter 41 einzustellen, insbesondere die L-Schraube 42, die LA-Schraube 43 und die H-Schraube 44.

Des Weiteren weist das Verfahren den Schritt auf: Einstellen der einstellbaren Komponente 40 basierend auf der ermittelten Information Info, insbesondere mittels der Einstellungseinrichtung 27.

Im gezeigten Ausführungsbeispiel sind die Garten- und/oder Forstübertragungseinheit 21, die Ermittlungseinrichtung 29 und die Einstellungseinrichtung 27 nur nach einer Betätigung oder während eines Betriebs des Verbrennungsmotorantriebssystems 30 funktionstüchtig. Das Garten- und/oder Forstgerät braucht keine Batterie zur Energieversorgung der Garten- und/oder Forstübertragungseinheit, der Ermittlungseinrichtung und der Einstellungseinrichtung aufzuweisen. Insbesondere weist das Verbrennungsmotorantriebssystem 30 einen Betätigungsgriff 36, insbesondere einen Ziehgriff, zum Betätigen, insbesondere zum Ziehen, des Verbrennungsmotorantriebssystems 30 auf. Das Ziehen kann die Garten- und/oder Forstübertragungseinheit, die Ermittlungseinrichtung und die Einstellungseinrichtung mit Energie versorgen.

In alternativen Ausführungsbeispielen kann die ermittelte Information übertragen werden, insbesondere von dem mobilen Bereitstellungsgerät an das Garten- und/oder Forstgerät. Das Garten- und/oder Forstgerät braucht die Ermittlungseinrichtung nicht aufzuweisen. Die Einstellungseinrichtung und die Garten- und/oder Forstübertragungseinheit können zum Zusammenwirken miteinander ausgebildet sein. Weiter kann es in alternativen Ausführungsbeispielen ausreichen, wenn entweder das mobile Bereitstellungsgerät zum Ermitteln der Information und zum Ausgeben der Information ausgebildet sein kann oder das mobile Bereitstellungsgerät zum Übertragen an das Garten- und/oder Forstgerät und dieses zum Einstellen der einstellbaren Komponente ausgebildet sein kann.

Wie die gezeigten und oben erläuterten Ausführungsbeispiele deutlich machen, stellt die Erfindung ein vorteilhaftes Verfahren zum Ermitteln einer Information zum Einstellen einer einstellbaren Komponente eines Verbrennungsmotorantriebssystems eines Garten- und/oder Forstgeräts bereit, das verbesserte Eigenschaften aufweist, insbesondere mehr Funktionalitäten, sowie ein Garten- und/oder Forstgerätesystem und das Garten- und/oder Forstgerät. Insbesondere ermöglichen das Verfahren, das Garten- und/oder Forstgerätesystem und das Garten- und/oder Forstgerät ein optimales Einstellen der einstellbaren Komponente des Verbrennungsmotorantriebssystems des Garten- und/oder Forstgeräts. Dies ermöglicht ein optimales Starten und/oder ein optimales Betreiben des Verbrennungsmotorantriebssystems. Das mobile Bereitstellungsgerät ermöglicht ein benutzerfreundliches Mitführen.

## Patentansprüche

1. Verfahren zum Ermitteln einer Information (Info) zum Einstellen einer einstellbaren Komponente (40) eines Verbrennungsmotorantriebssystems (30) eines Garten- und/oder Forstgeräts (20), wobei das Verfahren die Schritte aufweist:
a) Bereitstellen eines Kenngrößenparameters (KP) mittels eines mobilen Bereitstellungsgeräts (50), wobei der Kenngrößenparameter eine Kenngröße (KG) einer Umgebung (100) des Garten- und/oder Forstgeräts (20) beschreibt, und
b) Ermitteln der Information (Info) zum Einstellen der einstellbaren Komponente (40) in Abhängigkeit von dem bereitgestellten Kenngrößenparameter,
**dadurch gekennzeichnet, dass** das mobile Bereitstellungsgerät getrennt von dem Garten- und/oder Forstgerät (20) ausgebildet ist.

2. Verfahren nach Anspruch 1,
- wobei das Verfahren den Schritt aufweist: Ausgeben und/oder Übertragen der ermittelten Information (Info).

3. Verfahren nach Anspruch 2,
- wobei die Information (Info) optisch, akustisch und/oder haptisch ausgegeben wird.

4. Verfahren nach einem der vorhergehenden Ansprüche,
- wobei das Verfahren den Schritt aufweist: Übertragen des bereitgestellten Kenngrößenparameters (KP) und
- wobei der Schritt b) aufweist: Ermitteln der Information (Info) zum Einstellen der einstellbaren Komponente (40) in Abhängigkeit von dem übertragenen Kenngrößenparameter (KP).

5. Verfahren nach einem der vorhergehenden Ansprüche,
- wobei das Verfahren den Schritt aufweist: Einstellen der einstellbaren Komponente (40) basierend auf der ermittelten Information (Info).

6. Verfahren nach einem der vorhergehenden Ansprüche,
- wobei der Schritt a) aufweist: Empfangen des Kenngrößenparameters (KP).

7. Verfahren nach einem der vorhergehenden Ansprüche,
- wobei das mobile Bereitstellungsgerät (50) einen Sensor (51, 52) aufweist und
- wobei der Schritt a) aufweist: Erfassen der Kenngröße (KG) mittels des Sensors (51, 52).

8. Verfahren nach einem der vorhergehenden Ansprüche, die Kenngröße (KG) aufweisend:
- eine meteorologische Kenngröße (MP),
- eine Höhe (HE),
- eine Position (PO) und/oder
- einen von einem Betrieb des Verbrennungsmotorantriebssystems (30) erzeugten Schall (NO).

9. Verfahren nach einem der vorhergehenden Ansprüche,
- wobei die einstellbare Komponente (40) einen Gemischaufbereiter (41) aufweist und die Information (Info) eine Gemischaufbereitereinstellung (GAE) aufweist.

10. Verfahren nach einem der vorhergehenden Ansprüche,
- wobei das Garten- und/oder Forstgerät (20) eine Säge, einen Hoch-Entaster, einen Freischneider, eine Heckenschere, einen Heckenschneider, ein Blasgerät, einen Laubbläser, ein Kehrgerät, eine Kehrwalze, eine Kehrbürste, einen Rasenmäher und/oder einen Vertikutierer aufweist.

11. Garten- und/oder Forstgerätesystem (10), aufweisend:
- ein mobiles Bereitstellungsgerät (50), das zum Bereitstellen eines Kenngrößenparameters (KP) ausgebildet ist, wobei der Kenngrößenparameter eine Kenngröße (KG) einer Umgebung (100) eines Garten-
und/oder Forstgeräts (20) beschreibt,
- wobei das Garten- und/oder Forstgerät (20) ein Verbrennungsmotorantriebssystem (30) aufweist, das eine einstellbare Komponente (40) aufweist,
- wobei das Garten- und/oder Forstgerätesystem (10) zum Ermitteln einer Information (Info) zum Einstellen der einstellbaren Komponente in Abhängigkeit von dem bereitgestellten Kenngrößenparameter ausgebildet ist,
**dadurch gekennzeichnet, dass** das mobile Bereitstellungsgerät getrennt von dem Garten- und/oder Forstgerät (20) ausgebildet ist.

12. Garten- und/oder Forstgerätesystem (10) nach Anspruch 11,
- wobei das mobile Bereitstellungsgerät (50) ein Smartphone und/oder eine Smartwatch aufweist.

13. Garten- und/oder Forstgerätesystem (10) nach Anspruch 11 oder 12, aufweisend:
- das Garten- und/oder Forstgerät (20).

14. Garten- und/oder Forstgerätesystem (10) nach Anspruch 13,
- wobei das mobile Bereitstellungsgerät (50) eine Bereitstellungsübertragungseinheit (55) aufweist und
- wobei das Garten- und/oder Forstgerät (20) eine Garten- und/oder Forstübertragungseinheit (21) aufweist,
- wobei die Bereitstellungsübertragungseinheit und die Garten- und/oder Forstübertragungseinheit zum Zusammenwirken miteinander und zum Übertragen des bereitgestellten Kenngrößenparameters (KP) und/oder zum Übertragen der ermittelten Information (Info) ausgebildet sind.

15. Garten- und/oder Forstgerät (20), aufweisend:
- ein Verbrennungsmotorantriebssystem (30), das eine einstellbare Komponente (40) aufweist,
- eine Garten- und/oder Forstübertragungseinheit (21), die zum Übertragen einer Information (Info) zum Einstellen der einstellbaren Komponente von einem mobilen Bereitstellungsgerät ausgebildet ist und/oder
- die zum Übertragen eines Kenngrößenparameters (KP) von dem mobilen Bereitstellungsgerät, wobei der Kenngrößenparameter eine Kenngröße (KG) einer Umgebung (100) des Garten- und/oder Forstgeräts beschreibt, ausgebildet ist, wobei das Garten- und/oder Forstgerät zum Ermitteln der Information zum Einstellen der einstellbaren Komponente in Abhängigkeit von dem Kenngrößenparameter ausgebildet ist,
- **dadurch gekennzeichnet, dass** das mobile Bereitstellungsgerät getrennt von dem Garten- und/oder Forstgerät ausgebildet ist.

## Claims

1. Method for obtaining information (Info) for adjusting an adjustable component (40) of a combustion engine drive system (30) of a gardening and/or forestry apparatus (20), the method comprising the steps:
a) providing a characteristic parameter (KP) using a mobile provision device (50), wherein the characteristic parameter describes a characteristic (KG) of an environment (100) of the gardening and/or forestry apparatus (20), and
b) obtaining the information (Info) for adjusting the adjustable component (40) as a function of the provided characteristic parameter,
**characterized in that** the mobile provision device is configured separately from the gardening and/or forestry apparatus (20).

2. Method according to claim 1,
- wherein the method comprises the step: outputting and/or transmitting the obtained information (Info).

3. Method according to claim 2,
- wherein the information (Info) is output using optics, acoustics and/or haptics.

4. Method according to any of the preceding claims,
- wherein the method comprises the step: transmitting the provided characteristic parameter (KP), and
- wherein the step b) includes: obtaining the information (Info) for adjusting the adjustable component (40) as a function of the transmitted characteristic parameter (KP).

5. Method according to any of the preceding claims,
- wherein the method comprises the step: adjusting the adjustable component (40) based on the obtained information (Info).

6. Method according to any of the preceding claims,
- wherein the step a) includes: receiving the characteristic parameter (KP).

7. Method according to any of the preceding claims,
- wherein the mobile provision device (50) includes a sensor (51, 52), and
- wherein the step a) includes: identifying the characteristic (KG) using the sensor (51, 52).

8. Method according to any of the preceding claims, the characteristic (KG) comprising:
- a meteorological characteristic (MP),
- a height (HE),
- a position (PO) and/or
- a noise (NO) generated by an operation of the combustion engine drive system (30).

9. Method according to any of the preceding claims,
- wherein the adjustable component (40) includes a mixture preparation device (41) and the information (Info) includes a mixture preparation adjustment (GAE).

10. Method according to any of the preceding claims,
- wherein the gardening and/or forestry apparatus (20) includes a saw, a pole pruner, a clearing saw, a brush cutter, hedge shears, a hedge cutter, a blower device, a leaf blower, a sweeper device, a sweeper roller, a sweeper brush, a lawn mower and/or dethatcher.

11. Gardening and/or forestry apparatus system (10), comprising:
- a mobile provision device (50), configured to provide a characteristic parameter (KP), wherein the characteristic parameter describes a characteristic (KG) of an environment (100) of a gardening and/or forestry apparatus (20),
- wherein the gardening and/or forestry apparatus (20) includes a combustion engine drive system (30) which has an adjustable component (40),
- wherein the gardening and/or forestry apparatus system (10) is configured to obtain information (Info) for adjusting the adjustable component as a function of the provided characteristic parameter,
**characterized in that** the mobile provision device is configured separately from the gardening and/or forestry apparatus (20).

12. Gardening and/or forestry apparatus system (10) according to claim 11,
- wherein the mobile provision device (50) includes a smartphone and/or a smartwatch.

13. Gardening and/or forestry apparatus system (10) according to claim 11 or 12, comprising:
- the gardening and/or forestry apparatus (20).

14. Gardening and/or forestry apparatus system (10) according to claim 13,
- wherein the mobile provision device (50) includes a provision transmission unit (55), and
- wherein the gardening and/or forestry apparatus (20) includes a gardening and/or forestry transmission unit (21),
- wherein the provision transmission unit and the gardening and/or forestry transmission unit are configured to mutually cooperate and to transmit the provided characteristic parameter (KP) and/or to transmit the obtained information (Info).

15. Gardening and/or forestry apparatus (20), comprising:
- a combustion engine drive system (30) which has an adjustable component (40),
- a gardening and/or forestry transmission unit (21) configured to transmit information (Info) for adjusting the adjustable component from a mobile provision device and/or
- configured to transmit a characteristic parameter (KP) from the mobile provision device, wherein the characteristic parameter describes a characteristic (KG) of an environment (100) of the gardening and/or forestry apparatus, wherein the gardening and/or forestry apparatus is configured to obtain the information for adjusting the adjustable component as a function of the characteristic parameter,
**characterized in that** the mobile provision device is configured separately from the gardening and/or forestry apparatus.

## Revendications

1. Procédé permettant de déterminer une information (Info) pour régler un composant réglable (40) d'un système d'entraînement par moteur thermique (30) d'un outil de jardinage et/ou d'un outillage forestier (20), dans lequel le procédé présente les étapes consistant à :
a) fournir un paramètre de grandeur caractéristique (KP) au moyen d'un appareil de fourniture mobile (50), dans lequel le paramètre de grandeur caractéristique décrit une grandeur caractéristique (KG) d'un environnement (100) de l'outil de jardinage et/ou de l'outillage forestier (20), et
b) déterminer l'information (Info) pour régler le composant réglable (40) en fonction du paramètre de grandeur caractéristique fourni,
**caractérisé en ce que** l'appareil de fourniture mobile est réalisé séparément de l'outil de jardinage et/ou de l'outillage forestier (20).

2. Procédé selon la revendication 1,
- dans lequel le procédé présente l'étape consistant à : sortir et/ou transmettre l'information (Info) déterminée.

3. Procédé selon la revendication 2,
- dans lequel l'information (Info) est sortie de manière optique, acoustique et/ou tactile.

4. Procédé selon l'une quelconque des revendications précédentes,
- dans lequel le procédé présente l'étape consistant à : transmettre le paramètre de grandeur caractéristique fourni (KP), et
- dans lequel l'étape b) consiste à : déterminer l'information (Info) pour régler le composant réglable (40) en fonction du paramètre de grandeur caractéristique (KP) transmis.

5. Procédé selon l'une quelconque des revendications précédentes,
- dans lequel le procédé présente l'étape consistant à : régler le composant réglable (40) sur la base de l'information (Info) déterminée.

6. Procédé selon l'une quelconque des revendications précédentes,
- dans lequel l'étape a) consiste à : recevoir le paramètre de grandeur caractéristique (KP).

7. Procédé selon l'une quelconque des revendications précédentes,
- dans lequel l'appareil de fourniture mobile (50) présente un capteur (51, 52), et
- dans lequel l'étape a) consiste à : détecter la grandeur caractéristique (KG) au moyen du capteur (51, 52) .

8. Procédé selon l'une quelconque des revendications précédentes, la grandeur caractéristique (KG) présentant :
- une grandeur caractéristique météorologique (MP),
- une hauteur (HE),
- une position (PO), et/ou
- un son (NO) produit par un fonctionnement du système d'entraînement par moteur thermique (30).

9. Procédé selon l'une quelconque des revendications précédentes,
- dans lequel le composant réglable (40) présente un dispositif de préparation de mélange (41) et l'information (Info) présente un réglage de préparation de mélange (GAE).

10. Procédé selon l'une quelconque des revendications précédentes,
- dans lequel l'outil de jardinage et/ou l'outillage forestier (20) présente une scie, un sécateur, une débroussailleuse, une cisaille pour haie, un taille-haie, un outil de soufflage, un souffleur, un outil de balayage, un rouleau de balayage, une brosse de balayage, une tondeuse à gazon et/ou un scarificateur.

11. Système d'outils de jardinage et/ou d'outillages forestiers (10), présentant :
- un appareil de fourniture mobile (50) qui est réalisé pour fournir un paramètre de grandeur caractéristique (KP), dans lequel le paramètre de grandeur caractéristique décrit une grandeur caractéristique (KG) d'un environnement (100) de l'outil de jardinage et/ou de l'outillage forestier (20), et
- dans lequel l'outil de jardinage et/ou l'outillage forestier (20) présente un système d'entraînement par moteur thermique (30) qui présente un composant réglable (40),
- dans lequel le système d'outils de jardinage et/ou d'outillages forestiers (10) est réalisé pour déterminer une information (Info) pour régler le composant réglable en fonction du paramètre de grandeur caractéristique fourni,
**caractérisé en ce que** l'appareil de fourniture mobile est réalisé séparément de l'outil de jardinage et/ou de l'outillage forestier (20).

12. Système d'outils de jardinage et/ou d'outillages forestiers (10) selon la revendication 11,
- dans lequel l'appareil de fourniture mobile (50) présente un smartphone et/ou une montre intelligente.

13. Système d'outils de jardinage et/ou d'outillages forestiers (10) selon la revendication 11 ou 12, présentant :
- l'outil de jardinage et/ou l'outillage forestier (20) .

14. Système d'outils de jardinage et/ou d'outillages forestiers (10) selon la revendication 13,
- dans lequel l'appareil de fourniture mobile (50) présente une unité de transmission de fourniture (55), et
- dans lequel l'outil de jardinage et/ou l'outillage forestier (20) présente une unité de transmission à usage jardinier et/ou forestier (21),
- dans lequel l'unité de transmission de fourniture et l'unité de transmission à usage jardinier et/ou forestier sont réalisées pour coopérer ensemble et pour transmettre le paramètre de grandeur caractéristique (KP) fourni et/ou pour transmettre l'information (Info) déterminée.

15. Outil de jardinage et/ou outillage forestier (20), présentant :
- un système d'entraînement par moteur thermique (30) qui présente un composant réglable (40),
- une unité de transmission à usage jardinier et/ou forestier (21) qui est réalisée pour transmettre une information (Info) pour régler le composant réglable d'un appareil de fourniture mobile, et/ou
- qui est réalisée pour transmettre un paramètre de grandeur caractéristique (KP) de l'appareil de fourniture mobile, dans lequel le paramètre de grandeur caractéristique décrit une grandeur caractéristique (KG) d'un environnement (100) de l'outil de jardinage et/ou de l'outillage forestier, dans lequel l'outil de jardinage et/ou l'outillage forestier est/sont réalisé(s) pour déterminer l'information pour régler le composant réglable en fonction du paramètre de grandeur caractéristique,
- **caractérisé en ce que** l'appareil de fourniture mobile est réalisé séparément de l'outil de jardinage et/ou de l'outillage forestier.
